# EUROPÄISCHE PATENTSCHRIFT

(11) **EP 1 673 211 B1**
(45) Veröffentlichungstag und Bekanntmachung des Hinweises auf die Patenterteilung: **19.08.2009**
(21) Anmeldenummer: 04761961.4
(22) Anmeldetag: 12.10.2004
(51) Int. Cl.: B29C 47/10, C08G 63/90

(54) **VERFAHREN ZUR HERSTELLUNG EINES FORMKÖRPERS AUS EINEM POLYKONDENSAT**
METHOD FOR PRODUCING A SHAPED BODY FROM A POLYCONDENSATE
PROCEDE POUR PRODUIRE UN CORPS MOULE A PARTIR D'UN POLYCONDENSAT

(30) Priorität: 14.10.2003 DE 10348425
(43) Veröffentlichungstag der Anmeldung: 28.06.2006
(73) Patentinhaber: Bühler AG, 9240 Uzwil (CH)
(72) Erfinder: CHRISTEL, Andreas, CH-9524 Zuzwil (CH)
(74) Vertreter: Wilming, Martin
(86) Internationale Anmeldenummer: PCT/CH2004/000621
(87) Internationale Veröffentlichungsnummer: WO 2005/035221

(56) Entgegenhaltungen:
- WO-A-02/36317
- DE-A- 10 144 748
- DE-A- 19 536 289
- US-A- 5 597 891

## Beschreibung

Die Erfindung bezieht sich auf ein Verfahren zur Herstellung eines Formkörpers insbesondere eines Profils aus einem Polykondensat, insbesondere einem Polyester wie zum Beispiel Polyethylenterephthalat (PET), Polyethylennaphthalat (PEN), Polybutylenterephthalat (PBT) oder eines ihrer Copolymere, wobei das Polykondensat im Verlaufe des Verfahrens aufgeschmolzen und später wieder verfestigt wird.

Derartige Verfahren, insbesondere unter Verwendung von PET, sind bekannt. Das PET-Ausgangsmaterial stammt dabei direkt aus der PET-Synthese, oder man verwendet ein Rezyklat insbesondere ein. PET-Flaschenrecyclat (RPET), wobei man mit den nach dem Waschen und Zerkleinern gewonnenen Schnitzeln bzw. Flocken (Flakes) arbeitet. Diese Schnitzel enthalten neben allfälligen anderen ungewünschten Verunreinigungen stets geringe Mengen an Wasser, wobei es sich einerseits um nicht ausgetriebenes Restwasser vom Flaschenwaschprozess und/oder um neu eingedrungenes Wasser bei der Lagerung und dem Transport der Schnitzel handeln kann. Wenn nun diese Schnitzel aus RPET oder aber neues PET mit ihrem Wassergehalt zur Herstellung eines Formkörpers im Extruder aufgeschmolzen werden, läuft die Kondensationsreaktion vorwiegend in umgekehrter Richtung (Gleichgewichtseinstellung) ab und die Hydrolyse überwiegt, so dass die mittlere Kettenlänge, d.h. der Polymerisationsgrad, abnehmen, wodurch sich die Viskosität (angegeben als Viskositätszahl bzw. intrinsische Viskosität (IV)) des Polymers verringert. Dieser hydrolytische Abbau ist um so ausgeprägter je mehr Wasser und je mehr Zeit für die Abbaureaktion zur Verfügung stehen.

Bisherige Anstrengungen im Stand der Technik sind auf die Verringerung des Wassergehalts gerichtet. Die übliche Vortrocknung strebt dabei geringe Werte des Wassergehalts bis auf unter 100 ppm herab an (typischerweise etwa 30 ppm), um zu verhindern, dass bei der anschliessenden Aufschmelzung des PETs und/oder RPETs während der üblichen Verweilzeiten im geschmolzenen Zustand, in dem die Reaktionsgeschwindigkeiten des Polykondensats nennenswert sind, eine allzu starke Verringerung der IV stattfindet. Akzeptabel sind IV-Verringerungen um etwa 0,05 von etwa 0,80 auf etwa 0,75. Diese umfangreiche Vortrocknung benötigt relativ viel Zeit und Energie und verlangsamt das eingangs beschriebene Verfahren, wenn ein kontinuierlicher Betrieb mit integrierter Vortrocknung angestrebt wird.

Es entspricht ebenso dem Stand der Technik, aufgeschmolzenes PET und/oder RPET über längere Zeit einem Schmelzevakuum von wenigen mbar oder gar unter 1 mbar auszusetzen, um der Schmelze das Wasser, das in der Polykondensationsreaktion frei wird, zu entziehen und somit den Polymerisationsgrad zu erhöhen. Für Polyester mit hoher Viskosität und besonders auch für RPET aus gewaschenen Flaschenschnitzeln ist ein solches Vorgehen aber nicht geeignet, da die Polykondensationsreaktion gleichzeitig auch immer von Abbaureaktionen begleitet ist, was zu einer Verschlechterung der Produkteigenschaften, wie z.B. Gelbwert oderAcetaldehydgehalt, führt.

In DE10054226 wird ein Verfahren beschrieben, bei dem durch die geeignete Auswahl der Prozessparameter, insbesondere der Verweilzeit und optional einer limitierten Vortrocknung, der hydrolytische Abbau minimiert wird. Dieses Verfahren beschreibt jedoch nur die Herstellung von Granulaten oder von Strängen die anschliessend zu Granulaten geschnitten werden. Es wird also die Herstellung eines Zwischenproduktes beschrieben, das nochmals aufgeschmolzen werden muss, um daraus ein Produkt herzustellen, wobei die Form des Produkte in keinem Zusammenhang mit der Form des Granulates steht. Daraus ergibt sich der Nachteil, dass das Polykondensat insgesamt zumindest zwei mal aufgeschmolzen werden muss und sich so die Gesamtzeit, in der das Polykondensat in der Schmelze gehalten wird, verlängert, was bei der Herstellung des Endproduktes zu insgesamt höherem Abbau führt.

Demgegenüber liegt der Erfindung die Aufgabe zugrunde, das Verfahren des Stands der Technik derart zu gestalten, dass bei nur teilweiser Vortrocknung keine grössere IV-Verringerung als beim Stand der Technik eintritt, dass weitere Abbaureaktionen, die zur Verschlechterung der Produkteigenschaften führen, minimiert werden und, dass durch das. Verfahren direkt Formkörper hergestellt werden können, aus denen das fertige Produkt ohne nochmaliges aufschmelzen hergestellt werden kann.

Daraus ergibt sich der Vorteil, dass ein Produkt aus einem Polykonsdensatausgangsmaterial mit minimaler gesamter Verweilzeit des Polykondensates in der Schmelze hergestellt werden kann und somit der hydrolytische wie auch thermisch-oxidative Abbau insgesamt auf ein Minimum reduziert wird. Dies führt zum Beispiel zu verbesserten Farbwerten und bei der Verarbeitung von Polyethylenterephthalat zu geringeren Acetaldehydwerten.

Als Formkörper oder Profile werden fertige Produkte oder Halbzeuge, die durch Bearbeitungsschritte wie zum Beispiel Zuschneiden, Biegen oder Tiefziehen usw. in fertige Produkte umgewandelt werden können, bezeichnet. Die Form des Endproduktes entspricht dabei der Form des Formkörpers oder ist direkt von der Form des Formkörpers abgeleitet.

Zum Beispiel lässt sich ein Rahmen aus einem komplexen Profilstab herstellen, durch Zuschneiden und Aneinaderfügen mehrere Teile. Ebenso können aus einem runden Profilstab runde Scheiben oder Platten hergestellt werden, indem der Profilstab im wesentlichen quer zur Herstellrichtung geschnitten wird. Ein weiteres Beispiel ist die Herstellung von Hohlkörpern, wie Schalen oder Bechern aus einer Folie oder Platte, indem die Folie oder Platte in oder über ein Formgebungswerkzeug gepresst oder gezogen wird. Dabei kann es notwendig sein den Polykondensatformkörper bis zu einer Erweichungstemperatur aufzuheizen. Ein Aufheizen über den Schmelzpunkt des Polykondensates erfolgt jedoch nicht. Bei den Höhlkörpern kann es sich wiederum um fertige Produkte oder um Halbzeuge handeln, die zum Beispiel durch Streckblasformen nochmals eine Formanpassung durchlaufen.

Diese Aufgabe wird durch das Verfahren nach Anspruch 1 gelöst. Indem man die Zeit, während der das zu verarbeitende Polykondensat in der Schmelze vorliegt und auf Schmelztemperatur oder darüber ist, auf weniger als 60 Sekunden begrenzt. Dadurch hat das Polykondensat nicht mehr genug Zeit, um aufgrund seines relativ hohen Wasseranteils vorwiegend hydrolytisch zu reagieren. Somit kann auf die zeitraubende und energieintensive Vortrocknung zumindest teilweise verzichtet werden, und trotz des relativ hohen Wasseranteils im Ausgangs-Polykondensat tritt bei der Verarbeitung im Schmelzzustand deutlich weniger Hydrolyse auf. So kann z.B. bei PET bzw. RPET der IV-Abbau auch bei einem relativ hohen Wasseranteil von etwa 600 ppm auf einem kleinen, akzeptablen Wert gehalten werden.

Vorzugsweise wird bei dem erfindungsgemässen Verfahren die Gesamtzeit, während der die Temperatur des Polykondensats im Verlaufe des Verfahrens über der Schmelztemperatur des Polykondensats liegt, unter etwa 30 Sekunden gehalten. Dabei kann man sich erlauben, mit einem Restwassergehalt von mehr als 200 ppm (w/w) in der Schmelze zu arbeiten, ohne eine IV-Verringerung von mehr als 0,05 in Kauf nehmen zu müssen.

Für viele Anwendungen kommt als Polykondensat vorzugsweise Polyethylenterephthalat (PET) zum Einsatz.

Das Polykondensat kann in seiner Ausgangsform als Schüttmaterial mit einer Schüttdichte im Bereich von 200 kg/m³ bis 950 kg/m³, insbesondere in Form von Granulat, Pulver oder von Flocken respektive Schnitzeln vorliegen, wobei es sich bei letzteren typischerweise um Flaschen-Rezyklat (RPET) handelt.

Vorzugsweise wird das Polykondensat-Ausgangsmaterial vor dem Aufschmelzen teilweise vorgetrocknet. Dadurch kann durch Kombination einer wenig aufwendigen teilweisen Trocknung und der kurzen Verweilzeit im geschmolzenen Zustand ein Endprodukt mit geringem IV-Abbau erhalten werden.

Bei einer speziellen Ausführung weist das Verfahren einen Entgasungsschritt zum Entfernen flüchtiger Verunreinigungen und/oder Zerfallsprodukte aus dem Polykondensat auf.

Für die Aufschmelzung des Polykondensats wird vorzugsweise ein Zweiwellen- oder Mtehrwetten-Extruder, insbesondere ein Ring-Extruder, verwendet. Beim Ring-Extruder ist das Verhältnis zwischen den Oberflächen, an denen auf das zu verarbeitende Produkt aktiv eingewirkt wird, und dem Volumen des zu verarbeitenden Produkts besonders gross, so dass bei vorgegebener Baulänge eine höhere Entgasungsleistung und engeres Verweilzeitspektrum und schliesslich eine insgesamt kürzere Verweilzeit als bei herkömmlichen Doppelschnecken-Extrudern erreicht wird.

Vorzugsweise wird das Polykondensat in den Extruder im festen Zustand eingebracht, und das Polykondensat wird auf eine Temperatur unterhalb des Schmelzpunktes erwärmt, wobei das Polykondensat entgast und/oder getrocknet wird. Das Entgasen und/oder Trocknen des Polykondensats im festen Zustand erfolgt hier bei einem Druck von einigen mbar (typischerweise 20 - 300 mbar) unterhalb des atmosphärischen Drucks und/oder unter Zugabe eines Inertgases.

Insbesondere zeichnet sich das erfindungsgemässe Verfahren dadurch aus, dass sich die Gesamtzeit, während der das Polykondensat im Verlaufe des Verfahrens als Schmelze vorliegt, aus einem ersten Zeitabschnitt, während dem das Polykondensat nach dem Aufschmelzen im Extruder noch im Extruder verweilt, und aus einem zweiten Zeitabschnitt, während dem das noch geschmolzene Polykondensat ausserhalb des Extruders bearbeitet wird, zusammensetzt, wobei der erste Zeitabschnitt vorzugsweise weniger als etwa 15 Sekunden beträgt. Besonders vorteilhaft ist eine Verweilzeit der Schmelze im Extruder von weniger als etwa 10 Sekunden.

Wird ein RPET oder auch ein nur wenig vorgetrocknetes PET verarbeitet, so kann es von Vorteil sein, nach dem Aufschmelzen im Extruder eine Schmelzeentgasung durchzuführen, um allfällige Verunreinigungen aber auch Teile des gelösten Wassers aus der Schmelze zu entfernen. Dazu ist ein Vakuum von einigen 10 mbar Absolutdruck (typischerweise 30 - 130 mbar) ausreichend. Eine weitere Reduktion des Druckes ist häufig nicht notwendig und somit aus Prozesskostengründen dann auch nicht erwünscht. Trotzdem kann zur Reduktion des Partialdruckes der abzutrennenden Verunreinigungen über kurze Zeit ein Vakuum von nur wenigen mbar oder gar unter 1 mbar Absolutdruck eingesetzt werden.

Das erfindungsgemäße Verfahren ist auch zum Einarbeiten von Additiven geeignet.

Die Additive können vor dem Aufschmelzen zugegeben werden, entweder zusammen mit dem Polykondensat oder über eine separate Dosier- und Beschickungseinrichtung.

Dabei werden die Additive bei der Aufschmelzung durch die Knetelemente 13 gleichzeitig optimal gemischt. Die Additive können auch nach dem Aufschmelzen im Extruder zugegeben werden. Die Zugabe der Additive erfolgt zum Beispiel über eine Seitenbeschickungseinrichtung. Optional sind weitere Knet- oder Mischelemente im Extruder vorzusehen, damit die Additive optimal gemischt werden. In besonderen Fällen können die Additive auch erst nach dem Extruder zugegeben werden.

Als Additive eignen sich zum Beispiel Farbstoffe und Pigmente, UV Blocker, Verarbeitungshilfsmittel, Stabilisatoren, Schlagzähmodifikatoren, Schäummittel chemischer und physikalischer Art, Füllstoffe wie zum Beispiel Nukleirungsmittel, Barrier oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen usw.

Die Additive können alleine oder als Bestandteil eines Additivpaketes zugegeben werden. Zur Herstellung des Additivpaketes werden mehrerer Additive eingesetzt. Zusätzlich kann ein Trägermaterial verwendet werden in das sich alle Additive einarbeiten lassen. Das Additivpaket kann sowohl als homogenes Pulver oder Granulat wie auch als einfache Additivmischung vorliegen.

Die Bearbeitung des geschmolzenen Polykondensats ausserhalb des Extruders (zweiter Zeitabschnitt) kann den Schritt der Schmelzefiltration zur Abscheidung von Verunreinigungspartikeln enthalten. Zum Aufbau des notwendigen Druckes wird vorzugsweise eine Schmelzepumpe eingesetzt. Dazu müssen die Schmelzepumpe und der Schmelzefilter so in den Prozess integriert werden, dass die erfindungsgemässe kurze Verweilzeit eingehalten wird.

Ebenso zu dem zweiten Zeitabschnitt gehört der Schritt zur Formgebung und der Schritt zur anschliessenden Abkühlung auf eine Temperatur, bei der die Umkehrreaktion der Polykondensationsreaktion im wesentlichen gestoppt ist.

Der Schritt der Formgebung erfolgt dabei typischerweise in einer Düse, durch die die Polykondensatschmelze extrudiert wird. Verschiedene Formen an Düsenaustrittsöffnungen können eingesetzt werden. Einfache Formen wie zum Beispiel runde, ringförmige oder mehreckige, insbesondere im wesentlichen rechteckige oder aber auch komplexe Formen kommen in Frage. Bei den im wesentlichen rechteckigen Düsenaustrittsöffnungen entsteht durch ein hohes Breite zu Höhe Verhältnis (z.B. B:H >= 10) ein bandförmiger Formkörper. Bei einem geringen Breite zu Höhe Verhältnis (z.B. B:H < 10) entsteht ein im wesentlichen rechteckiges Profil. Auch bei den nicht bandförmigen, komplexen Düsenaustrittsöffnungen ist üblicherweise ein geringes Breite zu Höhe Verhältnis gegeben, wodurch ein Profil entsteht. Solche komplexe Profile weisen zumindest eine Teilfläche auf, die in einem Winkel zu einer weiteren Teilfläche angeordnet ist.

Die Grösse des Formkörpers, gemessen in Breite und Höhe ergibt sich aus den Abmessungen der Düsenaustrittsöffnung und allfälligen Nachformprozessschritten, wie zum Beispiel Recken oder Einschnüren. Zum Erlangen der gewünschten Form des Formkörpers ist es allgemein bekannt, die Form der Düsenaustrittsöffnung so an die Eigenschaften des zu verarbeitenden Polykondensates anzupassen, dass allfällige Formveränderungen nach dem Düsenaustritt, zum Beispiel durch Strangaufweitung, kompensiert werden.

Üblicherweise liegt zumindest die Breite oder Höhe der Düsenaustrittsöffnung und insbesondere des Formkörpers über 10 mm, insbesondere über 25 mm. Bei Formkörpern mit grossem Breite zu Höhe Verhältnis sind Breiten grösser als 100 mm insbesondere über 250 mm bevorzugt. Andererseits ist es von Vorteil, wenn zumindest eine Ausdehnung des Formkörpers 100 mm, insbesondere 50 mm nicht überschreitet, da sich sonst die Abkühlung zwischen Aussenwand und Zentrum des Formkörpers zu stark unterschiedlich verhalten würde.

Die Länge des Formkörpers ist dadurch gegeben, wie oft der Formkörper im wesentlichen quer zur Herstellrichtung geschnitten wird. Die Länge kann dabei um Grössenordnungen grösser sein als die Breite oder Höhe, was zum Beispiel bei Folien oder Bändern der Fall ist. Bei Profilstäben ist die Länge immer noch deutlich über der Länge oder Breite. Bei Scheiben oder Blöcken hingegen kann die Länge des Formkörpers geringer oder zumindest in einer vergleichbaren Grössenordnung sein als seine Breite oder Höhe.

Der zweite Zeitabschnitt ist beendet, wenn alles Polykondensat die Schmelztemperatur des Polykondensates Tₘ unterschritten hat. Dazu soll eine rasche Abkühlung erfolgen.

Zumindest soll die anfängliche Abkühlung von der Schmelzetemperatur des Polykondensates beim Verlassen der Düse (T_{D}) auf eine Abkühltemperatur (Tₐ) mit einer Kühlrate von mehr als 300°C/Min, bevorzugterweise mit mehr als 600°C/Min, besonders bevorzugterweise mit mehr als 1200°C/Min, erfolgen, wobei Tₐ = 0.9 * Tₘ entspricht. Die Abkühlung kann durch ein Kühlmedium, wie zum Beispiel Wasser oder flüssiger Stickstoff, oder durch Kontakt mit einer kalten Oberfläche, wie zum Beispiel einer Kühlwalze oder eines Kühlmantels um das Profil, erfolgen. Wird eine Kühlvorrichtung verwendet, die konstruktiv mit der Düse verbunden ist, so gilt als Übergang vom Düsenbereich in den Kühlbereich die Stelle wo die Temperatur der Vorrichtung die Schmelztemperatur des Polykondensates unterschreitet.

Vor allem bei dickeren Formkörpern ist eine anfänglich hohe Abkühlrate von grosser Bedeutung, nicht nur um die zusätzliche Verweilzeit ausserhalb der Düse gering zu halten, sondern auch deshalb, weil sich der Abbau im Inneren und Äusseren des Formkörpers unterschiedlich stark vollzieht. Im weiteren Verlauf des Prozesses kann der Formkörper dann schonender, um Spannungen zu verhindern, abgekühlt oder sogar gezielt getempert werden, wobei ein überschreiten der Abkühltemperatur Tₐ für längere Zeit vermieden werden soll. Anschliessend kann der Formkörper zum Beispiel aufgerollt, umgeformt, ausgestanzt oder in Teile von definierter Länge und/oder Breite zugeschnitten werden.

Es ist ein Merkmal der vorliegenden Erfindung, dass durch das erfindungsgemässe Verfahren Formkörper aus Polyethylenterephthalat mit sehr geringem hydrolytischem Abbau und sehr geringen Mengen an Acetaldehyd hergestellt werden können. So ist es möglich, dass Formkörper mit weniger als 3 ppm, insbesondere weniger als 2 ppm Acetaldehyd hergestellt werden können, ohne, dass der Formkörper einem Konditionierungsschritt zur Entfernung von Acetaldehyd unterzogen werden muss.

Weitere Vorteile, Merkmale und Anwendungsmöglichkeiten der Erfindung ergeben sich aus der nun folgenden Beschreibung nicht einschränkend aufzufassender Beispiele anhand der Zeichnung, wobei:
- Fig_{:} 1: die für einen IV-Abbau von 0,81 auf 0,76 zulässige Verweilzeit von PET im geschmolzenen Zustand als Funktion des Restwassergehalts einer PET-Schmelze zeigt;
- Fig. 2a -2e: Beispiele für mögliche einfache Formkörper- bzw. Profilgeometrien zeigen; und
- Fig. 3a - 3d: Beispiele für mögliche komplexe Formkörper- bzw. Profilgeometrien zeigen.

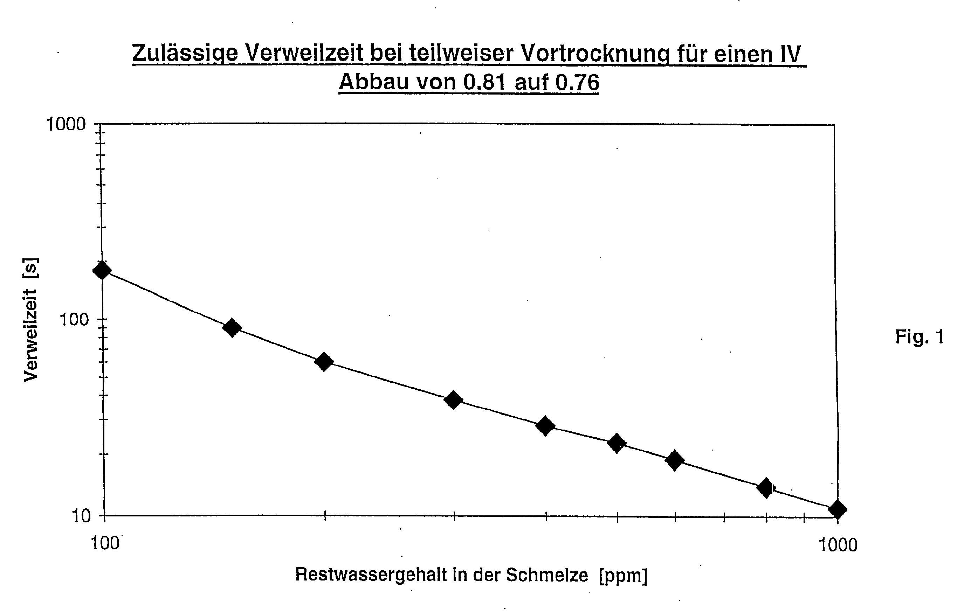

Die Figur 1 zeigt die für einen IV-Abbau von 0,81 auf 0,76 zulässige Verweilzeit von PET im geschmolzenen Zustand als Funktion des Restwassergehalts der PET- , Schmelze. Dabei sind die zulässigen Verweilzeiten bei 285°C Schmelzetemperatur bei teilweiser Vortrocknung angegeben, die den IV-Abbau auf den für viele Anwendungen akzeptablen Wert von 0.05 beschränken. Wie eingangs erwähnt, muss im Gegensatz dazu beim Stand der Technik eine Vortrocknung auf unter 100 ppm angestrebt werden.

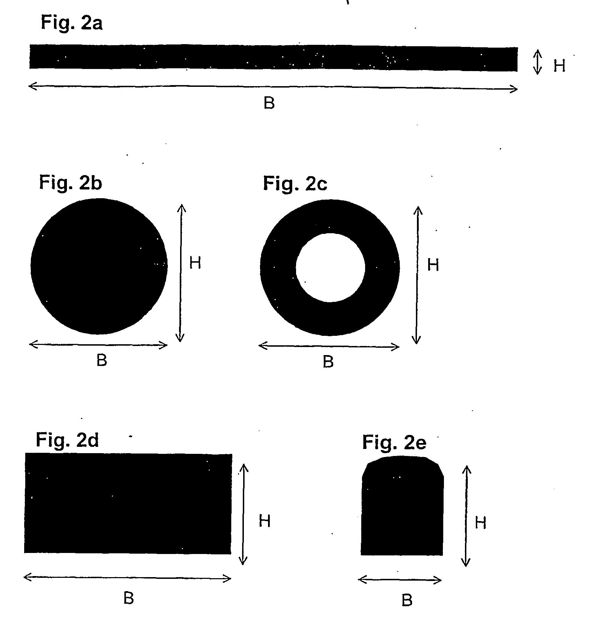

Die Figuren 2a - 2e zeigen Beispiele für mögliche einfache Formkörper- bzw. Profilgeometrien.

Fig. 2a zeigt einen Formkörper bzw. ein Profil mit rechteckförmigem Querschnitt, wobei das Verhältnis B:H gross, z.B. > 10 ist. Dies stellt ein Bandprofil dar.

Fig. 2b zeigt einen Formkörper bzw. ein Profil mit kreisförmigem Querschnitt. Dies stellt ein Rundprofil dar.

Fig. 2c zeigt einen Formkörper bzw. ein Profil mit kreisringförmigem Querschnitt. Dies stellt ein Bandprofil dar.

Fig. 2d zeigt einen Formkörper bzw. ein Profil mit rechteckförmigem Querschnitt, wobei das Verhältnis B:H klein, z.B. etwa 1:1 bis 3:1 ist. Dies stellt ein Stabprofil dar.

Fig. 2e zeigt einen Formkörper bzw. ein Profil mit rechteckförmigem Querschnitt und mit abgeschrägten Kanten. Dies stellt ein Leistenprofil dar.

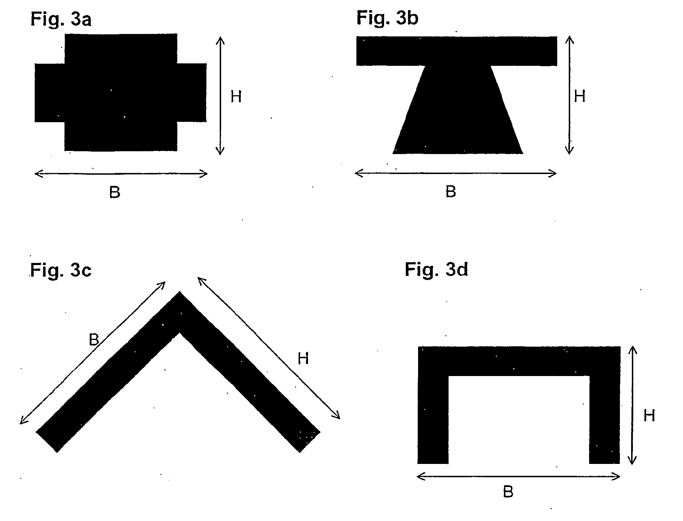

Die Figuren 3a - 3d zeigen Beispiele für mögliche komplexe Formkörper- bzw. Profilgeometrien, wobei Fig. 3a ein Kreuzprofil, Fig. 3b ein Schwalbenschwanzprofil, Fig. 3c ein Winkelprofil und Fig. 3d ein U-Profil darstellt.

Anstelle von Formkörpern bzw. Profilen lassen sich mit dem erfindungsgemässen Verfahren auch Folien oder Bänder herstellen. Dabei haben die Folien vorzugsweise eine dichte von etwa 200 µm und werden insbesondere als flexible Verpackungsfolien verwendet. Die erfindungsgemäss hergestellten Bänder haben vorzugsweise eine Dichte von mehr als 200 µm, können aber auch über 800 µm dick sein. Die maximale Dicke dieser Bänder liegt bei etwa 5 mm. Sie werden insbesondere als starre oder halbstarre Verpackungen verwendet.

### Beispiel 1

Ein Polyethylenterephthalatgranulat hergestellt mit einem Antimon Katalysator, einer anfänglichen intrinsischen Viskosität von 0.84 dl/g und einem Feuchtegehalt von 600 ppm wurde in einem 30 mm Ringextruder aufgeschmolzen und entgast und anschliessend mittels einer Zahnradpumpe durch eine Profildüse ausgetragen. Das Profil wurde direkt nach dem Düsenaustritt abgekühlt. Aus dem Profil wurden Scheiben mit ca. 40 mm Durchmesser und ca. 5 mm Dicke hergestellt. Der Durchsatz betrug 200 kg/h. Die Verweilzeit im Schmelzezustand im Extruder betrug ca. 4 Sekunden und die Verweilzeit im Schmelzezustand nach dem Extruder betrug ca. 12 Sekunden.

Die hergestellten Scheiben hatten eine intrinsische Viskosität im Bereich von 0.79 bis 0.80 dl/g und einen Acetaldehydgehalt im Bereich von 1.5 bis 1.8 ppm.

### Beispiel 2

Ein Polyethylenterephthalatgranulat hergestellt mit einem Germanium Katalysator, einer anfänglichen intrinsischen Viskosität von 0.75 dl/g und einem Feuchtegehalt von 2000 ppm wurde in einem 30 mm Ringextruder aufgeschmolzen und entgast und anschliessend mittels einer Zahnradpumpe durch eine Profildüse ausgetragen. Das Profil wurde direkt nach dem Düsenaustritt abgekühlt. Aus dem Profil wurden Scheiben mit ca. 40 mm Durchmesser und ca. 5 mm Dicke hergestellt. Der Durchsatz betrug 200 kg/h. Die Verweilzeit im Schmelzezustand im Extruder betrugt ca. 4 Sekunden und die Verweilzeit im Schmelzezustand nach dem Extruder betrug ca. 12 Sekunden.

Die hergestellten Scheiben hatten eine intrinsische Viskosität im Bereich von 0.71 bis 0.72 dl/g und einen Acetaldehydgehalt im Bereich von 2.0 bis 2.5 ppm.

### Beispiel 3

Ein Polyethylenterephthalatgranulat wurde wie in Beispiel 2 verarbeitet. Der Durchsatz betrug 120 kg/h. Die Verweilzeit im Schmelzezustand im Extruder betrug ca. 6 Sekunden und die Verweilzeit im Schmelzezustand nach dem Extruder betrug ca. 18 Sekunden.
Die hergestellten Scheiben hatten eine intrinsische Viskosität im Bereich von 0.72 dl/g.

### Beispiel 4

Ein Polyethylenterephthalatgranulat wurde wie in Beispiel 2 verarbeitet. Der Durchsatz betrug 250 kg/h. Die Verweilzeit im Schmelzezustand im Extruder betrug ca. 3 Sekunden und die Verweilzeit im Schmelzezustand nach dem Extruder betrug ca. 10 Sekunden.
Die hergestellten Scheiben hatten eine intrinsische Viskosität im Bereich von 0.71 dl/g.

## Patentansprüche

1. Verfahren zur Herstellung eines Endproduktes aus einem Formkörper, insbesondere aus einem Profil, bestehend aus einem Polykondensat, wobei das Polykondensat im Verlaufe des Verfahrens in einem Extruder aufgeschmolzen und später wieder zu einem Formköper verfestigt wird und die. Gesamtzeit, während der die Temperatur des Polykondensats im Verlaufe des Verfahrens über der Schmelztemperatur des Polykondensats liegt, weniger als 60 Sekunden beträgt,
wobei die Gesamtzeit, während der das Polykondensat im Verlaufe des Verfahrens als Schmelze vorliegt, einen ersten Zeitabschnitt, während dem das Polykondensat nach dem Aufschmelzen im Extruder noch im Extruder verweilt, und einen zweiten Zeitabschnitt, während dem das noch geschmolzene Polykondensat ausserhalb des Extruders bearbeitet wird, aufweist, wobei die Dauer des ersten Zeitabschnitts weniger als 15 Sekunden beträgt, und das Endprodukt aus dem Formkörper ohne nochmaliges Aufschmelzen durch Aufheizen des Formkörpers bis zu einer Erweichungstemperatur hergestellt wird, wobei die Form des Endproduktes der Form des Formkörpers entspricht oder direkt von der Form des Formkörpers abgeleitet wird, wobei die Bearbeitung des geschmolzenen Polykondensates- ausserhalb des Extruders die Verwendung einer formgebenden Düse beinhaltet, welche eine Austrittsöffnung mit einer Grösse, in zumindest einer Richtung (Breite oder Höhe), von mehr als 10 mm aufweist.

2. Verfahren nach Anspruch 1, **dadurch gekennzeichnet, dass** die Gesamtzeit, während der die Temperatur des Polykondensats im Verlaufe des Verfahrens über der Schmelztemperatur des Polykondensats liegt, weniger als 30 Sekunden beträgt.

3. Verfahren nach Anspruch 1 oder 2, **dadurch gekennzeichnet, dass** der Restwassergehalt in der Schmelze grösser als 200 ppm ist.

4. Verfahren nach einem der Ansprüche 1 bis 3, **dadurch gekennzeichnet, dass** das Polykondensat ein Polyester, insbesondere Polyethylenterephthalat oder eines seiner Copolymere ist.

5. Verfahren nach einem der vorhergehenden Ansprüche, **dadurch gekennzeichnet, dass** das Polykondensat in seiner Ausgangsform als Schüttmaterial zum Beispiel in Form von Granulat, Flocken oder Schnitzeln vorliegt und eine Schüttdichte im Bereich von 200 kg/m³ bis 950 kg/m³ vorliegt.

6. Verfahren nach einem der Ansprüche 4 bis 5, **dadurch gekennzeichnet, dass** es sich bei dem Polyethylenterephthalat um Flaschen-Recyclat handelt.

7. Verfahren nach einem der vorhergehenden Ansprüche, **dadurch gekennzeichnet, dass** das Polykondensat-Ausgangsmaterial vor dem Aufschmelzen teilweise vorgetrocknet wird.

8. Verfahren nach einem der vorhergehenden Ansprüche, **dadurch gekennzeichnet, dass** es einen Entgasungsschritt zum Entfernen flüchtiger Verunreinigungen und/oder Zerfallsprodukte aus der Polykondensatschmelze aufweist.

9. Verfahren nach einem der Ansprüche 1 bis 8, **dadurch gekennzeichnet, dass** für die Aufschmelzung des Polykondensats ein Zweiwellen- oder Mehrwellen-Extruder, insbesondere ein Ring-Extruder, verwendet wird.

10. Verfahren nach einem der Ansprüche 1 bis 9, bei dem das Polykondensat in den Extruder im festen Zustand eingebracht wird, das Polykondensat auf eine Temperatur unterhalb des Schmelzpunktes erwärmt wird und das Polykondensat entgast und/oder getrocknet wird, **dadurch gekennzeichnet, dass** das Entgasen und/oder Trocknen des, Polykondensats im festen Zustand bei einem Druck unterhalb des atmosphärischen Drucks und/oder unter Zugabe eines Inertgases erfolgt.

11. Verfahren nach einem der Ansprüche 1 bis 10, **dadurch gekennzeichnet, dass** die Dauer des ersten Zeitabschnitts weniger als 10 Sekunden beträgt.

12. Verfahren nach einem der Ansprüche 1 bis 11, **dadurch gekennzeichnet, dass** die Bearbeitung des geschmolzenen Polykondensates ausserhalb des Extruders eine Schmelzefiltration beinhaltet.

13. Verfahren nach einem der Ansprüche 1 bis 12, **dadurch gekennzeichnet, dass** die Bearbeitung des geschmolzenen Polykondensates ausserhalb des Extruders die Verwendung einer Schmelzepumpe beinhaltet.

14. Verfahren nach einem der Ansprüche 1 bis 13 **dadurch gekennzeichnet, dass** die Austrittsöffnung eine Grösse, in zumindest einer Richtung (Breite oder Höhe), von mehr als 25 mm aufweist.

15. Verfahren nach einem der Ansprüche 1 bis 14 **dadurch gekennzeichnet, dass** das Polykondensat nach dem Verlassen der formgebenden Düse mit einer anfänglichen Kühlrate von mehr als 300°C pro Minute abgekühlt wird.

16. Verfahren nach Anspruch 15 **dadurch gekennzeichnet, dass** das Polykondensat nach dem Verlassen der formgebenden Düse mit einer anfänglichen Kühlrate von mehr als 600°C pro Minute, insbesondere mit mehr als 1200°C pro Minute, abgekühlt wird.

17. Verfahren nach einem der vorhergehenden Ansprüche **dadurch gekennzeichnet, dass** dem Polykondensat ein Additiv zugemischt wird.

## Claims

1. Process for producing an end product out of a moulded part, in particular out of a profile, consisting of a polycondensate, wherein, in the course of the process, the polycondensate is melted in an extruder and later solidified back to a moulded part and the overall time during which the temperature of the polycondensate in the course of the process is above the melting temperature of the polycondensate is less than 60 seconds, wherein the overall time during which the polycondensate in the course of the process is present as a melt includes a first time segment, during which the polycondensate after melting in the extruder continues to dwell in the extruder, and a second time segment, during which the still molten polycondensate is processed outside the extruder, wherein the duration of the first time segment is less than 15 seconds, and the end product is produced out of the moulded part without further melting by heating the moulded part to a softening temperature, wherein the shape of the end product corresponds to the shape of the moulded part or is directly derived from the shape of the moulded part, wherein the processing of the molten polycondensate outside the extruder comprises the use of a shape-conferring die which includes an outlet opening having a size of more than 10 mm in at least one direction (width or height) .

2. Process according to Claim 1, **characterized in that** the overall time during which the temperature of the polycondensate in the course of the process is above the melting temperature of the polycondensate is less than 30 seconds.

3. Process according to Claim 1 or 2, **characterized in that** the residual water content in the melt is greater than 200 ppm.

4. Process according to any one of Claims 1 to 3, **characterized in that** the polycondensate is a polyester, more particularly polyethylene terephthalate or one of its copolymers.

5. Process according to any preceding claim, **characterized in that** the polycondensate is initially present as a loose bulk material in the form of granulate, flakes or chips for example and a bulk density ranging from 200 kg/m³ to 950 kg/m³ is present.

6. Process according to either of Claims 4 and 5, **characterized in that** the polyethylene terephthalate comprises bottle recyclate.

7. Process according to any preceding claim, **characterized in that** the polycondensate starting material is partially predried before melting.

8. Process according to any preceding claim, **characterized in that** it includes a degassing step for removing volatile impurities and/or decomposition products from the polycondensate melt.

9. Process according to any one of Claims 1 to 8, **characterized in that** the polycondensate is melted using an extruder having two or more shefts, more particularly a ring extruder.

10. Process according to any one of Claims 1 to 9, which comprises introducing the polycondensate into the extruder in the solid state, heating the polycondensate to a temperature above the melting point and degassing and/or drying the polycondensate, **characterized in that** the degassing and/or drying of the polycondensate is effected in the solid state at a pressure below atmospheric pressure and/or with addition of an inert gas.

11. Process according to any one of Claims 1 to 10, **characterized in that** the duration of the first time segment is less than 10 seconds.

12. Process according to any one of Claims 1 to 11, **characterized in that** the processing of the molten polycondensate outside the extruder comprises a melt filtration.

13. Process according to any one of Claims 1 to 12, **characterized in that** the processing of the molten polycondensate outside the extruder comprises the use of a melt pump.

14. Process according to any one of Claims 1 to 13, **characterized in that** the outlet opening has a size of more than 25 mm in at least one direction (width or height).

15. Process according to any one of Claims 1 to 14, **characterized in that** the polycondensate leaving the shape-conferring die is cooled down at an initial cooling rate of more than 300°C per minute.

16. Process according to Claim 15, **characterized in that** the polycondensate leaving the shape-conferring die is cooled down at an initial cooling rate of more than 600°C per minute, more particularly at more than 1200°C per minute.

17. Process according to any preceding claim, **characterized in that** the polycondensate is admixed with an additive.

## Revendications

1. Procédé de fabrication d'un produit final à partir d'un corps moulé, en particulier un profilé, constitué d'un polycondensat, dans lequel
le polycondensat est fondu dans une extrudeuse au cours du procédé et est ensuite resolidifié en un corps moulé,
la totalité de la durée pendant laquelle la température du polycondensat est située au-dessus de la température de fusion du polycondensat au cours du procédé est inférieure à 60 secondes,
la totalité de la durée pendant laquelle le polycondensat se présente à l'état fondu au cours du procédé présente un premier intervalle de temps pendant lequel le polycondensat séjourne encore dans l'extrudeuse après avoir été fondu dans l'extrudeuse et un deuxième intervalle de temps pendant lequel le polycondensat encore fondu est traité à l'extérieur de l'extrudeuse, la durée du premier intervalle de temps étant inférieure à 15 secondes,
le produit final étant fabriqué à partir du corps moulé sans autre fusion, par chauffage du corps moulé jusqu'à une température d'amollissement,
la forme du produit final correspondant directement à la forme du corps moulé ou dérivant directement de la forme du corps moulé,
le traitement du polycondensat fondu à l'extérieur de l'extrudeuse recourant à une tuyère de moulage dont l'ouverture de sortie présente une taille supérieure à 10 mm dans au moins une direction (largeur ou hauteur).

2. Procédé selon la revendication 1, **caractérisé en ce que** la totalité de la durée pendant laquelle la température du polycondensat est située au-dessus de la température de fusion au cours du procédé est inférieure à 30 secondes.

3. Procédé selon les revendications 1 ou 2,
**caractérisé en ce que** la teneur résiduelle en eau de la matière fondue est supérieure à 200 ppm.

4. Procédé selon l'une des revendications 1 à 3, **caractérisé en ce que** le polycondensat est un polyester, en particulier un poly(téréphtalate d'éthylène) ou un de ses copolymères.

5. Procédé selon l'une des revendications précédentes, **caractérisé en ce que** dans sa forme initiale, le polycondensat se présente comme matériau en vrac, par exemple en forme de granulés, d'écailles ou de copeaux, et a une masse spécifique en vrac comprise dans la plage de 200 kg/m³ à 950 kg/m³.

6. Procédé selon l'une des revendications 4 à 5, **caractérisé en ce que** le poly(téréphtalate d'éthylène) est un recyclat de bouteilles.

7. Procédé selon l'une des revendications précédentes, **caractérisé en ce que** le polycondensat de départ est séché partiellement avant sa fusion.

8. Procédé selon l'une des revendications précédentes, **caractérisé en ce qu'**il présente une étape de dégazage qui sépare les impuretés volatiles et/ou le produit de décomposition du polycondensat fondu.

9. Procédé selon l'une des revendications 1 à 8, **caractérisé en ce que** pour la mise en fusion du polycondensat, on utilise une extrudeuse à deux arbres, à plusieurs arbres et en particulier une extrudeuse à anneau.

10. Procédé selon l'une des revendications 1 à 9, dans lequel le polycondensat est apporté à l'état solide dans l'extrudeuse, le polycondensat est chauffé à une température inférieure au point de fusion et le polycondensat est dégazé et/ou séché, **caractérisé en ce que** le dégazage et/ou le séchage du polycondensat ont lieu à l'état solide à une pression inférieure à la pression atmosphérique et/ou avec addition d'un gaz inerte.

11. Procédé selon l'une des revendications 1 à 10, **caractérisé en ce que** la durée du premier intervalle de temps est inférieure à 10 secondes.

12. Procédé selon l'une des revendications 1 à 11, **caractérisé en ce que** le traitement du polycondensat fondu à l'extérieur de l'extrudeuse comporte une filtration de matière fondue.

13. Procédé selon l'une des revendications 1 à 12, **caractérisé en ce que** le traitement du polycondensat fondu à l'extérieur de l'extrudeuse comporte l'utilisation d'une pompe à matière fondue.

14. Procédé selon l'une des revendications 1 à 13, **caractérisé en ce qu'**au moins dans une direction (largeur ou hauteur), l'ouverture de sortie présente une taille supérieure à 25 mm.

15. Procédé selon l'une des revendications 1 à 14, **caractérisé en ce qu'**après avoir quitté la tuyère de moulage, le polycondensat est refroidi à une vitesse initiale de refroidissement de plus de 300°C par minute.

16. Procédé selon la revendication 15, **caractérisé en ce qu'**après avoir quitté la tuyère de moulage, le polycondensat est refroidi à une vitesse initiale de refroidissement de plus de 600°C par minute et en particulier de plus de 1 200°C par minute.

17. Procédé selon l'une des revendications précédentes, **caractérisé en ce qu'**un additif est ajouté au polycondensat.
